(19)

**Europäisches Patentamt**
**European Patent Office**
**Office européen des brevets**

(11) **EP 1 083 148 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(51) Int Cl.:
***C01B 33/32*** *(2006.01)*

(21) Anmeldenummer: **00118945.5**

(22) Anmeldetag: **01.09.2000**

(54) **Schwerlösliches Alkalisilikat**

Sparingly soluble alkali silicate

Silicate alcalin difficilement soluble

(84) Benannte Vertragsstaaten:
**DE**

(30) Priorität: **11.09.1999 DE 19943551**

(43) Veröffentlichungstag der Anmeldung:
**14.03.2001 Patentblatt 2001/11**

(73) Patentinhaber: **Clariant Produkte (Deutschland) GmbH**
**65929 Frankfurt am Main (DE)**

(72) Erfinder:
• **Bauer, Harald, Dr.**
**50170 Kerpen (DE)**

• **Holz, Josef, Dr.**
**50374 Erftstadt (DE)**
• **Schimmel, Günther, Dr.**
**50374 Erftstadt (DE)**
• **Tapper, Alexander, Dr.**
**41239 Mönchengladbach (DE)**

(56) Entgegenhaltungen:
| | |
|---|---|
| **EP-A- 0 164 514** | **EP-A- 0 970 918** |
| **WO-A-00/18859** | **US-A- 5 614 160** |
| **US-A- 5 900 399** | |

## Beschreibung

Gegenstand der Erfindung ist ein schwerlösliches Alkalisilikat, ein Verfahren zu seiner Herstellung und seine Verwendung in Wasch- und Reinigungsmitteln.

Kristalline schichtförmige Natriumsilikate (Schichtsilikate) der Formel $NaMSi_xO_{2x+1} \cdot yH_2O$ , wobei M Natrium oder Wasserstoff bedeutet, x eine Zahl von 1,9 bis 4 und y eine Zahl von 0 bis 20 ist und bevorzugte Werte für x 2, 3 oder 4 sind, haben sich als geeignete Ersatzstoffe für die Waschmittelbuilder Phosphat und Zeolith erwiesen. Die Verwendung solcher kristallinen Schichtsilikate zur Enthärtung von Wasser wird beispielsweise in der EP-A-0 164 514 beschrieben.

Waschmittelbuilder erfüllen eine Vielzahl von Funktionen. Darunter sind besonders die Entfernung oder Herabsetzung der Wasserhärte in dem zum Waschen verwendeten Leitungswasser und die Lieferung von Alkalität, d.h. die Regulierung und Erhöhung des pH-Wertes in der Waschlauge zu nennen.

Die Entfernung der im Leitungswasser in Form von Calcium- und Magnesiumionen vorhandenen Wasserhärte ist wichtig, da sie bei den üblichen, insbesondere höheren Waschtemperaturen an Heizstäben und Waschmaschinenwänden sowie an Textilien anorganische Verkrustungen (Inkrustierungen) verursacht und die häufig eingesetzten anionischen Tenside in Form von sogenannten Kalkseifen zur Ausfällung bringt. Dies hat eine Minderung der Waschkraft zur Folge und führt bereits nach wenigen Waschgängen zu einem Grauschleier auf der Wäsche.

Die vorgenannten anorganische Inkrustierungen bestehen aus in Form von Calciumcarbonat ausgefällter Wasserhärte bzw. aus abgelagerten Resten gelöster Waschmittelbuilderanteile. Die erwünschte Erhöhung des pH-Wertes in der Waschlösung hat zur Folge, daß die etwa vorhandenen Schmutzpartikel eine höhere Oberflächenladung erhalten und so leichter vom zu waschenden Gewebe zu entfernen sind.

Man unterscheidet bei den silikatischen Waschmittelbuildern leichtlösliche und schwerlösliche Typen. Bei den leichtlöslichen silikatischen Waschmittelbuildern handelt es sich häufig um reine röntgenamorphe Natriumsilikate. Diese Natriumsilikate, die aus sprühgetrocknetem Natrium-wasserglas hergestellt werden, können zwar zur Regulierung des pH-Wertes beitragen, jedoch können sie zur Herabsetzung der Wasserhärte nur einen geringen Beitrag liefern.

Schwerlösliche Waschmittelbuilder, zu den vor allem die aluminiumhaltigen Silikate (Zeolithe) gehören, sind jedoch von sich aus nicht in der Lage, den pH-Wert in der Waschlösung günstig zu beeinflussen, d.h. eine höhere Alkalinität der Waschlösung bereitzustellen.

Gleiches gilt für die schwerlöslichen magnesiumhaltigen Silikate, wie sie etwa aus der EP-A 0 550 048 bekannt sind.

Bisher fehlt es somit an Buildern des schwerlöslichen Typs, die - trotz ihrer Schwerlöslichkeit - ein hohes Wasserenthärtungsvermögen aufweisen und gleichzeitig eine überzeugende Wirksamkeit als Builder zeigen.

Es ist daher Aufgabe der vorliegenden Erfindung, einen schwerlöslichen Builder auf Alkalisilikatbasis zur Verfügung zu stellen, der sowohl ein hohes Wasserenthärtungsvermögen aufweist als auch als Builder selbst hochwirksam ist.

Diese Aufgabe wird gelöst durch ein schwerlösliches Alkalisilikat, das ein Alkalischichtsilikat in fein verteilter Form eingebettet in 0,1 bis 40 Gew.-% einer nicht-schichtsilikatischen Matrix der Formel $x\,M^1_2O \cdot y\,SiO_2$, in der $M^1$ ein Alkalimetall und y/x (1,9 bis 500) : 1 bedeutet, enthält, wobei das schwerlösliche Alkalisilikat 1 bis 40 Gew.-% alpha-Dinatriumdisilikat, 0 bis 60 Gew.-% beta-Dinatriumdisilikat, 10 bis 77 Gew.-% delta-Dinatriumdisilikat enthält.

Bevorzugt entspricht das kristalline Alkalisilikat insgesamt der allgemeinen Formel

$$a\,M^I_2O \cdot b\,M^{II}_O \cdot c\,X_2O_3 \cdot d\,Z_2O_5 \cdot e\,SiO_2 \cdot f\,H_2O$$

entspricht, in der $M^I$ ein Alkalimetall, $M^{II}$ ein Erdalkalimetall, X ein Element der dritten Hauptgruppe und Z ein Element der fünften Hauptgruppe des Periodensystems bedeuten und weiterhin gilt:

$0 < a \leq 1;$
$0 \leq b \leq 0,5;$
$0 \leq c/e \leq 0,05;$
$0 \leq d/e \leq 0,25;$
$1,9 \leq e \leq 4;$
$0 \leq f \leq 20$

Bevorzugt ist

$0 < a \leq 1;$
$0 \leq b \leq 0,05;$
$0 \leq c/e \leq 0,025;$

$$0 \leq d/e \leq 0,01;$$
$$1,9 \leq e \leq 4;$$
$$0 \leq f \leq 20$$

Besonders bevorzugt ist

$$0 \leq a \leq 1;$$
$$b = 0;$$
$$c/e = 0;$$
$$d/e = 0;$$
$$1,9 \leq e \leq 4;$$
$$0 \leq f \leq 20$$

Bevorzugt bedeutet y/x (2,0 bis 200) zu 1.

Bevorzugt bedeutet $M^I$ Natrium.

Bevorzugt ist die nicht-schichtsilikatische Alkalisilikatumgebung aus nicht-schichtsilikatischen Natriumsilikaten zusammengesetzt.

Zu solchen nicht-schichtsilikatischen Natriumsilikaten gehören insbesondere die amorphen Natriumsilikate, die im Röntgenpulverdiffraktogramm typischerweise keine scharfen Reflexe, die einer geordneten Kristallstruktur zuzuordnen sind, zeigen; sie besitzen auch keine definierte stöchiometrische Zusammensetzung. Bevorzugt ist das Alkalischichtsilikat aus schichtförmigen kristallinen Dinatriumdisilikaten zusammengesetzt.

Letztere wiederum bestehen üblicherweise aus mindestens einer polymorphen Phase.

Bevorzugt enthält das schwerlösliches Alkalisilikat bis zu 10 Gew.-%, bezogen auf den Alkalisilikatgehalt, an weiteren Bestandteilen.

Bevorzugt handelt es sich bei den weiteren Bestandteilen um kationische und/oder anionische Bestandteile.

Bevorzugt handelt es sich bei den kationischen Bestandteilen um Alkalimetallionen und/oder Erdalkalimetallkationen und/oder Fe, W, Mo, Ta, Pb, Al, Zn, Ti, V, Cr, Mn, Co und/oder Ni.

Bevorzugt handelt es sich bei den anionischen Bestandteilen um Sulfate, Fluoride, Chloride, Bromide, Iodide, Carbonate, Hydrogencarbonate, Nitrate, Oxidhydrate, Phosphate und/oder Borate.

Bevorzugt enthält das schwerlösliches Alkalisilikat bis zu 10 Mol-% Bor, bezogen auf den Gesamtgehalt an $SiO_2$.

Bevorzugt enthält das schwerlösliches Alkalisilikat bis zu 50 Mol-% Phosphor, bezogen auf den Gesamtgehalt an $SiO_2$.

Bevorzugt weist das schwerlösliches Alkalisilikat als Pulver einen mittleren Teilchendurchmesser von 0,1 bis 150 $\mu$m auf.

Bevorzugt weist das schwerlösliches Alkalisilikat als kompaktiertes Granulat einen mittleren Teilchendurchmesser von 10 bis 2000 $\mu$m auf.

Die vorliegende Aufgabe wird ebenfalls gelöst durch ein Verfahren zur Herstellung von schwerlöslichen Alkalisilikaten, dadurch gekennzeichnet, daß man ein Natriumsilikathaltiges Ausgangsmaterial mit einer oder mehreren Verbindungen, die die Komponenten $M^I$, $M^{II}$, X und/oder Z enthalten, vermischt und zur Kristallisation bringt. $M^I$ bedeutet ein Alkalimetall, $M^{II}$ ein Erdalkalimetall, X ein Element der dritten Hauptgruppe und Z ein Element der fünften Hauptgruppe des Periodensystems. Als Verbindungen eignen sich bevorzugt die Oxide, geeignet sind jedoch auch andere Verbindungen. Das Mischungsverhältnis der Reaktanden wird dabei bevorzugt so gewählt, dass die Mischung eine Zusammensetzung hat, die der Zusammensetzung der oben beschriebenen erfindungsgemäßen Alkalisilikate entspricht.

Bevorzugt setzt man als Natriumsilikathaltiges Ausgangsmaterial Wasserglas ein.

Bevorzugt wird Wasserglas mit Natronlauge, Wasserglas oder anderen Silikatquellen vermischt, sprühgetrocknet und zur Kristallisation gebracht.

Bevorzugt beträgt die Kristallisationstemperatur 700 bis 1300 K.

Bevorzugt beträgt die Kristallisationstemperatur 800 bis 1200 K.

Besonders bevorzugt beträgt die Kristallisationstemperatur 900 bis 1100 K.

Die Erfindung betrifft auch die Verwendung von schwerlösliches Alkalisilikat zur Herstellung von Wasch- und Reinigungsmittel, einschließlich Geschirrspülmitteln.

Die Erfindung betrifft ebenfalls Wasch- und Reinigungsmittel, welche ein erfindungsgemäßes schwerlösliches Alkalisilikat enthalten.

Bevorzugt enthalten die Wasch und Reinigungsmittel

0,5 bis 98 Gew.-% schwerlösliches Alkalisilikat

0,5 bis 80 Gew.-% Cobuilder

ad 100 Gew.-% weitere übliche Inhaltsstoffe.

Bevorzugt enthalten die Wasch- und Reinigungsmittel

0,5 bis 98 Gew.-% schwerlösliches Alkalisilikat

0,5 bis 80 Gew.-% Cobuilder

0,5 bis 80 Gew.-% pH-Regulatoren

ad 100 Gew.-% weitere übliche Inhaltsstoffe.

Bevorzugt enthalten die Wasch- und Reinigungsmittel

0,5 bis 98 Gew.-% schwerlösliches Alkalisilikat

0,5 bis 80 Gew.-% Cobuilder

0,5 bis 80 Gew.-% pH-Regulatoren

1 bis 50 Gew.-% grenzflächenaktive Substanzen

ad 100 Gew.-% weitere übliche Inhaltsstoffe.

Bevorzugt enthalten die Wasch- und Reinigungsmittel

0,5 bis 98 Gew.-% schwerlösliches Alkalisilikat

0,5 bis 80 Gew.-% Cobuilder

0,5 bis 80 Gew.-% pH-Regulatoren

1 bis 50 Gew.-% grenzflächenaktive Substanzen

1 bis 70 Gew.-% Bleichsystem

ad 100 Gew.-% weitere übliche Inhaltsstoffe.

Bevorzugt enthalten die Wasch- und Reinigungsmittel 0,5 bis 98 Gew.-% schwerlösliches Alkalisilikat

0,5 bis 80 Gew.-% Cobuilder

0,5 bis 80 Gew.-% pH-Regulatoren

1 bis 70 Gew.-% Bleichsystem

ad 100 Gew.-% weitere übliche Inhaltsstoffe.

Bevorzugt enthalten die Wasch- und Reinigungsmittel 0,5 bis 98 Gew.-% schwerlösliches Alkalisilikat

0,5 bis 80 Gew.-% pH-Regulatoren

1 bis 50 Gew-% grenzflächenaktive Substanzen

1 bis 70 Gew.-% Bleichsystem

ad 100 Gew.-% weitere übliche Inhaltsstoffe.

Bevorzugt enthalten die Wasch- und Reinigungsmittel 0,5 bis 98 Gew.-% schwerlösliches Alkalisilikat

0,5 bis 80 Gew.-% pH-Regulatoren

1 bis 70 Gew.-% Bleichsystem

ad 100 Gew.-% weitere übliche Inhaltsstoffe.

Bevorzugt enthalten die Wasch- und Reinigungsmittel

0,5 bis 98 Gew.-% schwerlösliches Alkalisilikat

0,5 bis 80 Gew.-% pH-Regulatoren

1 bis 40 Gew.-% grenzflächenaktive Substanzen

ad 100 Gew.-% weitere übliche Inhaltsstoffe.

Bevorzugt enthalten die Wasch- und Reinigungsmittel

0,5 bis 98 Gew.-% schwerlösliches Alkalisilikat

0,5 bis 80 Gew.-% pH-Regulatoren

ad 100 Gew.-% weitere übliche Inhaltsstoffe.

Bevorzugt enthalten die Wasch- und Reinigungsmittel

0,5 bis 98 Gew.-% schwerlösliches Alkalisilikat

1 bis 70 Gew.-% Bleichsystem

ad 100 Gew.-% weitere übliche Inhaltsstoffe.

Der bevorzugte Bereich in den vorgenannten Wasch- und Reinigungsmitteln für das schwerlösliche Alkalisilikat liegt zwischen 1 bis 50 Gew.-% und besonders bevorzugt zwischen 3 bis 30 Gew.-%. Gemäß anderen Ausführungsformen der Erfindung sind auch Gehalte von 60 bis 98 Gew.-% und besonders von 70 bis 98 Gew.-% bevorzugt.

Weitere bevorzugte/besonders bevorzugte Bereiche in den vorgenannten Wasch- und Reinigungsmitteln sind für die Cobuilder 1 bis 50 Gew.-% und 1 bis 30 Gew.-%; für die pH-Regulatoren ebenfalls 1 bis 50 Gew.-% und 1 bis 30 Gew.-%, für die grenzflächenaktiven Substanzen 1 bis 30 Gew.-% und 1 bis 20 Gew.-% und für das Bleichsystem 1 bis 40 Gew.-% und 1 bis 20 Gew.-%.

Bevorzugt handelt es sich bei den Cobuildern um kristalline Aluminosilikate, mono-, oligo- oder polymere Carbonsäuren, Alkalicarbonate, Alkaliortho-, -pyro-, polyphosphate, kristalline Alkalisilikate mit einem Kristallgitter ohne Schichtstruktur und/oder amorphe Alkalisilikate.

Bevorzugt handelt es sich bei dem Bleichsystem um Aktivchlor- und/oder Aktivsauerstoffträger, Bleichaktivator, -katalysator, zur Entfernung von Verfärbungen einsetzbare Enzyme, Perborat und/oder Percarbonat.

Bevorzugt handelt es sich bei den grenzflächenaktiven Substanzen um anionische, kationische, nicht-ionische und/oder zwitterionische Tenside.

Bevorzugt handelt es sich bei den pH-Regulatoren um Soda, Citronensäure, Natriumcitrat und/oder Bicarbonat.

Für die Herstellung von Wasserglas, welches nach dem erfindungsgemäßen Verfahren als Natriumsilikathaltiges Ausgangsmaterial eingesetzt werden kann, wird Sand mit Natronlauge oder Soda oder anderen Alkalien umgesetzt.

Die Umsetzung mit Sand kann hydrothermal, also in wässriger Lösung bei erhöhtem Druck und Temperatur oder thermisch (Wannenofen) durch Verschmelzen oder Tempern der Reaktionspartner miteinander erfolgen..

Durch geeignete Maßnahmen, wie beispielsweise die Zugabe von Alkalien oder Silicaten, wird in dem vorgenannten Wasserglas ein Molverhältnis von $SiO_2$ zu $Na_2O$ von $1{,}9 \leq e \leq 4$ zu $0 < a \leq 1$ eingestellt und dann das so erhaltene Ausgangsprodukt mit Wärme behandelt. Das Ausgangsprodukt kann vor der Wärmebehandlung noch modifiziert werden:

Eine Ausführungsform ist, die bei hydrothermalem Verfahren entstehende Lösung in die feste Form zu überführen und/oder den Wassergehalt der festen Form zu verändern. Der Wassergehalt läßt sich durch Besprühen mit Wasser (z.B. in einem Lödige, Telschig- oder Schugi-Mischer) erhöhen bzw. durch Nachtrocknen (z.B. Band-, Wirbelschicht-, Flugschichttrockner) erniedrigen.

Eine weitere Ausführungsform ist, den beim thermischen Verfahren anfallenden Feststoff in die flüssige Form zu überführen und/oder den Wassergehalt in der flüssigen Lösung durch Eindampfen bzw. Verdünnen optimal einzustellen.

Insbesondere ist das Wiedertrocknen der Lösung zu einem sprühgetrockneten Alkalisilikat bevorzugt.

Eine weitere Ausführungsform ist, den beim thermischen Verfahren anfallenden Feststoff mit Wasser zu versetzen und der Wärmebehandlung zuzuführen.

Für die Erzeugung des Schichtsilikates in besonders feinteiliger Verteilung in einer nicht-schichtsilikatischen Silikatumgebung ist die Wärmebehandlung entscheidend. Zur optimalen Erzeugung des erfindungsgemäßen Silikates sind Materialtemperaturen von 700K bis 1300K geeignet. Bevorzugt sind Temperaturen von 800K bis 1200K. Besonders bevorzugt sind Temperaturen von 900 bis 1100K. Dabei kann die Temperatur gleichmäßig im Ofen verteilt sein. Als Apparate werden bevorzugt: Drehrohre, Wirbelbettöfen, Kokillenöfen, Bandöfen, Flugstaubfeuerungen, Muffelofen verwendet. Der Wärmeeintrag in das Material kann direkt, indirekt, konvektiv, strahlungs- oder kontakterhitzt erfolgen.

Die weiteren Bestandteile können an einer beliebigen Stufe vor oder nach der Kristallisation zugefügt werden. Bevorzugt ist die weiteren Bestandteile zur Umsetzung mit dem Sand hinzuzufügen. Besonders bevorzugt ist die weiteren Bestandteile in die Lösung aus der Reaktion mit dem Sand zu dosieren. Ebenfalls bevorzugt ist die weiteren Bestandteile im Zuge der Verdüsung der Lösung bei der Sprühtrocknung zu ebensolcher Lösung zuzudosieren.

Das Produkt nach der Wärmebehandlung kann bevorzugt physikalisch verändert werden. Durch Mahlung und nachfolgende Klassierung wird die Korngröße optimal eingestellt. Zur Mahlung eignen sich beispielsweise Schwingmühlen, Kugelmühlen, Walzen- und Pendelrollmühlen der Fa. Neuman & Esser sowie Luftstrahlmühlen wie Typen der Fa. Hosokawa-Alpine. Als Klassierung dienen Sichtung und/oder Siebung. Zur Siebung können z.B. Allgaier-, Rhewum-, Locker-Siebe dienen.

Bevorzugt wird durch Granulierung und nachfolgende Klassierung die Korngröße optimal eingestellt. Dazu wird das gemahlene Pulver auf einem Pelletierteller oder einem Mischer mit einem Granulierhilfsmittel versetzt. Durch Einwirkung von Scherkräften agglomeriert das Material. Eine Ausführungsform ist das Material nachfolgend zu trocknen. Eine weitere Ausführungsform ist das Material ungetrocknet zu belassen.

Granulierhilfsmittel können sein: Bentonite, Hectorite, Saponite, modifizierte oder unmodifizierte Cellulosen, Polymere und Copolymere, Wasserglas, Tenside und andere Waschmittelinhaltsstoffe.

Bevorzugt wird durch Rollkompaktierung, Mahlung und nachfolgende Klassierung die Korngröße optimal eingestellt. Dazu wird das gemahlene Pulver gegebenenfalls mit einem Hilfsstoff gemischt und in einem Rollkompaktor (Fa. Hosokawa-Bepex, Fa. Alexanderwerk) kompaktiert. Der Pressdruck beträgt zwischen 2 und 100kN/cm$^2$ Walzenbreite. Das Material kann gegebenenfalls nachfolgend getrocknet werden.

Kompaktierhilfsmittel können sein: Bentonite, Hectorite, Saponite, modifizierte oder unmodifizierte Cellulosen, Polymere und Copolymere, Wasserglas, Tenside und andere Waschmittelinhaltsstoffe.

Die besonders feine Verteilung kann erfindungsgemäß erreicht werden, indem man das $M^I_2O / SiO_2$-Verhältnis des Materials im Ausgangsprodukt einstellt und dann die Alkalischichtsilikate - dabei sind die Natriumschichtsilikate bevorzugt - zur Kristallisation bringt.

Die weiteren Bestandteile befinden sich bevorzugt nicht im schichtsilikatischen Teil sondern im nichtsilikatischen Teil.

Erfindungsgemäß können jedoch auch durch Fehler in der Kristallstruktur die schichtsilikatischen Anteile erhebliche Mengen an weiteren Bestandteilen aufweisen.

Die erfindungsgemäßen schwerlöslichen Alkalisilikate können - wie oben ausgeführt - Verwendung in Wasch- und Reinigungsmitteln finden. Bevorzugt sind hier pulverförmige Voll-, Color- und Spezialwaschmittel. Vollwaschmittel sind ausgewogene Formulierungen mit dem Ziel einer möglichst hohen Waschwirkung.

Colorwaschmittel sollen vor allem Farbtextilien schonen hinsichtlich Ausbleichen und Verwaschen der Farben und Verfilzen der Fasern. Spezialwaschmittel zielen auf enge Anwendungsgebiete wie Fleckensalze, Bleichbooster, Gardinenwaschmittel, Wollwaschmittel etc.

Buildersilikate können weiterhin Anwendung finden in Wasserenthärtern, die vor allem in Regionen mit hoher Wasserhärte einen leistungssteigernden Effekt auf das Waschergebnis und einen Schutzeffekt hinsichtlich der Waschmaschine besitzt.

Weitere Anwendungen sind Maschinengeschirreiniger oder Maschinengeschirrspülmittel. Hier sind Silikate vor allem wegen ihrer guten Schmutzdispergierung, ihrer hohen Alkalität und wegen ihrer Schutzwirkung gegen Schädigungen von Gläsern gefragt. Unter Glasschädigung versteht man dabei sowohl die Bildung von schichtförmigen Ablagerungen auf Gläsern oder die Erosion der Glasoberfläche. Beides führt zu den bekannten unerwünschten Trübungen vonGläsern.

Wasch- und Reinigungsmittel in ihrer Form als Waschmittel, Wasserenthärter und Maschinengeschirreiniger können in Pulverform, Granulatform und Tablettenform eingesetzt werden. Für die Tablettenform wird die Waschmittelformulierung gemischt und mit einer Tablettenpresse in die entsprechende Form gepresst. Die Form kann dabei zylinderförmig oder quaderförmig sein oder ggf. auch weitgehend beliebige andere geometrische Formen annehmen. Im Falle der Zylinderform kann das Verhältnis von Radius zu Höhe zwischen 0,25 und 4 betragen.

Der Pressdruck kann zwischen 12 und 0,3 kN/cm$^2$ betragen. Dies ist im wesentlichen unabhängig von der geometrischen Form der Tablette. Bevorzugt ist auch die mehrstufige Verpressung. Hierbei werden beliebige Anteile der Formulierung in mehreren Schritten nacheinander aufeinander gepresst, so daß sich mehrere Schichten ergeben. Im Falle einer Zweischichttablette ist dabei besonders bevorzugt ein Volumenverhältnis der beiden Schichten von 1 zu 10 bis 10 zu 1.

Bestimmung der Kornverteilung mit dem Microtrac Granulometer

Die Größe von Teilchen in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. 400ml Ethanol werden durch die Lasermeßzelle gepumpt. Automatisch wird die Festkörperprobe (z.B. 70 mg) zudosiert und nach 10 min die Teilchengrößenverteilung bestimmt. Die Auswertungseinheit des Gerätes berechnet den mittleren Teilchendurchmesser ($d_{50}$-Wert).

Bestimmung der Kornverteilung durch Siebanalyse

In eine Siebmaschine der Fa. Retsch werden die Einsätze mit gewünschten Sieben eingesetzt. Dabei nimmt die Maschenweite der Siebe von oben nach unten ab. 50 g des zu untersuchenden Probematerials werden auf das weiteste Sieb aufgegeben. Durch die Schwingbewegung der Siebmaschine wird das Probematerial durch die verschiedenen Siebe befördert. Die Rückstände auf den Sieben werden ausgewogen und rechnerisch auf die Materialeinwaage bezogen. Aus den Werten kann der $d_{50}$-Wert berechnet werden.

Löslichkeitstest

Dazu werden 800 ml Leitungswasser (Wasserhärte 18 Grad deutscher Härte entsprechend 18° dH) auf 20°C temperiert und mit einem Propeller- (Balken-) Rührer gerührt. 2 g der Testsubstanz werden zugegeben und 20 min gerührt. Mit dem leichten Vakuum einer Wasserstrahlpumpe wird die Dispersion durch ein $20\mu$m-Metallsiebgewebe gesaugt. Das Sieb wird bei 80 bis 100 °C eine Stunde im Umlufttrockenschrank getrocknet. Die Gewichtszunahme wird auf die Einwaage bezogen, auf Prozent normiert und die Differenz zu 100 % als Löslichkeit (in %) bezeichnet.

Bestimmung des Calciumbindevermögens (CBV)

Eine Mischung aus einer Puffer-Stammlösung und deionisiertem Wasser werden in einem ErWeKa Disolutiontester vorgelegt, gerührt und auf 30°C temperiert. Die Puffer-Stammlösung ist eine wässrige Lösung von Glycin, Natriumchlorid, Calciumchlorid und Natriumhydroxid in geeigneten Konzentrationen. Die Calciumsensitive Elektrode Modell 932001 der Fa. Orion wird in die Lösung eingetaucht und durch Aufstockung der Lösung mit einer Calcium-Stammlösung geeicht. Das geschieht mit der Auswerteeinheit EA 940 der Fa. Orion. Nach der Aufstockung enthält die Lösung eine Wasserhärte von 17 ° dH.

Gleichzeitig mit Zugabe der Untersuchungssubstanz (1 g) wird das Orion EA 940 gestartet. Der pH-Wert der Meßlösung beträgt 10,2. Das Orion EA 940 gibt in bestimmten Zeitabständen die Konzentration an freien Calciumionen an. Mit Hilfe der vorher bestimmten Einwaage an Calcium wird aus der Konzentration der freien, nicht gebundenen Calciumionen nach 10 min auf die Menge gebundenen Calciums, d.h. das Calciumbindevermögen, geschlossen. Dies wird in mg $CaCO_3$/g angegeben.

Bestimmung des Verhältnisses $SiO_2$ zu $Na_2O$

Eine Probe von 1,3 g des zu untersuchenden Materials wird in ca 100 ml demineralisiertes Wasser gegeben und durch 30 minütiges Rühren bei 50°C vollständig in Lösung gebracht. Dann wird jeweils die Menge $SiO_2$ und $Na_2O$ durch Titration bestimmt und das Verhältnis $SiO_2$ zu $Na_2O$ berechnet, in dem man deren molaren Mengen berechnet und zueinander ins Verhältnis setzt.

a) Natriumoxid Menge:
Diese wird bestimmt indem man die vorgenannte wässrige Lösung der Probe in einem Sensolab-Titrator der Fa. Jensen Systems potentiometrisch bei Raumtemperatur mit 1 N Salzsäure titriert.
b) Die Lösung aus a) wird mit 85 ml einer ca. 4 %igen wässrigen Lösung von Natriumfluorid versetzt und mit dem gleichen Apparat wie unter a) wiederum potentiometrisch bei Raumtemperatur mit 1N Salzsäure titriert. Dabei werden je mol $SiO_2$ 4 mol Natriumhydroxid freigesetzt und gleichzeitig 4 mol Salzsäure verbraucht. Diesen Nachweis-Reaktionen liegen die folgenden Reaktionsgleichungen zugrunde:

$$H_2SiO_3 + 6NaF + H_2O \rightarrow Na_2SiF_6 + 4\ NaOH$$

$$4NaOH + HCl \rightarrow 4\ H_2O + 4NaCl$$

Bestimmung der Phasenzusammensetzung

Eine Probe des Untersuchungsmaterials wird in einem Mörser pulverisiert und in einem Röntgenpulverdiffraktometer Philips PW1710 vermessen (Parameter: Cu K alpha 2-Strahlung, Wellenlänge 1,54439 Angström, Beschleunigungsspannung 35kV, Heizstrom 28 mA, Monochromator, Scangeschwindigkeit 3 Grad 2 theta pro Minute). Die erhaltenen Intensitäten werden wie folgt ausgewertet.

| Substanz | Charakteristischer Peak (d-Wert in Angström) | Quelle |
|---|---|---|
| Alpha-Phase | 3,29 +/- 0,07, typisch 3,31 | SKS-5 (EP 0 164 552) hkl 140 von JCPDS Nr. 22-1397 (aber auch 19-1233, 19-1234, 19-1237) |
| Beta-Phase | 2,97 +/- 0,06 | SKS-7 (EP 0 164 552) hkl 400 von JCPDS Nr. 29-1261 (aber auch 19-1236, 23-0529) |
| Delta-Phase | 3,97 +/- 0,08 | SKS-6 (EP 0 164 552) hkl 120 von JCPDS Nr. 22-1396 |

Die JCPDS Nummern beziehen sich auf Referenzdiffraktogramme von Substanzen, gelistet von dem Joint Commitee of Powder Diffraction Standards.
Die Gehalte der alpha-, beta-, delta-Phasen der Silikate berechnen sich in Prozent aus den Intensitäten $I_a$, $I_b$, $I_d$ - gemessen in Impulsen - der alpha-, beta-, delta-Phasen nach folgenden Formeln:

$$\text{Alpha-Gehalt: } A\ [\%] = 100 \cdot I_a/(I_a+I_b+I_d)$$

$$\text{Beta-Gehalt: } B\ [\%] = 1{,}41 \cdot 100 \cdot I_b/(I_a+I_d)$$

$$\text{Delta-Gehalt: } D\ [\%] = 100 - A - D$$

Zur Bestimmung des Anteils an nicht-schichtsilikatischem Natriumsilikat [AM] wird der Untergrund (Impulse) des Röntgenpeaks bei einem d-Wert von 2,65 Angström ($I_{am}$) bestimmt und mit folgender empirischen Formel in den Prozentgehalt umgerechnet. :

$$AM\ [\%] = (I_{am}-70) \cdot 100/450$$

Kompaktieren von Natriumsilikaten

In einem Rollkompaktor (Firma Hosokawa-Bepex, Typ: L200/50P) wird das zu kompaktierende Material mit Hilfe einer Stopfschnecke zwischen die Kompaktorwalzen befördert (Einstellung: Stufe 5). Dies geschieht so schnell, daß bei einer Auflagenlänge von 50 mm ein Preßdruck von 140 bis 160 kN entsteht. Die Walzenumdrehung wird auf Stufe 3 bis 7 gestellt, der Walzenspalt beträgt dabei 0,1 mm. Die entstehenden Schülpen (Länge: ca. 50 mm, Dicke: ca. 2 bis 5 mm, Breite ca. 10 bis 15 mm) werden in einer Hammermühle (Fa. Alpine, Typ UPZ) mit einem Sieblochdurchmesser von 5mm bei einer Umdrehungszahl von 600 bis 1400 Upm gebrochen. Vom gebrochenen pulverförmigen Produkt werden Überkorn (mit Sieb mit Lochdurchmesser 1,4 mm) und Unterkorn (Lochdurchmesser 0,25 mm) abgetrennt.

Herstellung der Testwaschmittel

Die optischen Aufheller werden in einem Viertel der Alkylethoxylat-Menge angerührt und im Haushalts-Multimixer (Fa. Braun) mit der Hälfte der Sodamenge gemischt. Im Pflugscharmischer der Fa. Lödige wird der Rest Soda und die Gesamtmengen Zeolith und Polymer 15 Minuten bei 300 U/Min. gemischt. Dann wird die Hälfte des verbliebenen Nonionic in 5 Minuten aufgesprüht. Dann wird das schwerlösliche Alkalisilikat zugegeben und 10 Minuten gemischt. Dann wird die restliche zweite Hälfte Alkylethoxylat (AE) in weiterer 5 Minuten aufgesprüht. Schließlich werden LAS, Seife, Antischaum, Phosphonat und Compound mit opt. Aufheller zugegeben und 10 Minuten bei 300 U/Min. nachgemischt. Im Taumelmischer wird die Mischung aus dem Lödigemischer unter geringer Scherbelastung mit Perborat, TAED und Enzymen versetzt und 15 Minuten vermischt.

Waschversuche

In einer haushaltsüblichen Waschmaschine (Typ: Novotronic 927 WPS, Fa. Miele) wurden bei 60°C und einer Wasserhärte von 18°dH spezielle Testgewebe mit einem Testwaschmittel bei einer Dosierung von z.B. 65 bzw. 135 g/ Waschgang gewaschen. Den Testgeweben wurde weiterer Wäscheballast (3,75 kg) beigefügt.

Bestimmung der anorganischen Inkrustierung

Zur Bestimmung der anorganischen Inkrustierung wurden Testgewebe, dies sind ein Baumwollfrottee- (Fa. Vossen), jeweils ein Baumwolldoppelripp-, Polyester/Baumwolle-Mischgewebe (Typ 20A) und Standardbaumwollgewebe (Typ 10A) der Fa. Wäschereiforschung Krefeld Testgewebe GmbH und ein Standardbaumwollgewebe der Eidgenössischen Materialprüfanstalt St. Gallen, Schweiz wiederholt (15 mal) nach obengenannter Prozedur gewaschen. Nach 15 Wäschen wurde von jedem der Gewebe eine Probe genommen und diese in einem Muffelofen bei einer Temperatur 1000°C und einer Zeitdauer von 24 Stunden verascht. Die Gewichte der Rückstande werden rechnerisch auf die eingesetzten Gewebemengen (Gewichte) bezogen.

Bestimmung der Waschwirkung (WW)

In fünf verschiedenen Waschzyklen wurden je 2 Läppchen der 5 verschieden künstlich angeschmutzten Gewebe (WFK 10C, WFK 10D, WFK 20D, WFK 30D von Fa. Wäschereiforschung Krefeld Testgewebe GmbH und EMPA 104 von der Eidgenössischen Materialprüfanstalt St. Gallen, Schweiz) zugesetzt und einmal gewaschen. Die Lappen wurden gebügelt und die Remissionen mit dem Weißgradmeßgerät Elrepho 3000 der Firma Datacolor an jedem der Testläppchen viermal ohne UV-Anregung (mit Verwendung eines UV-Sperr-Filters) bestimmt. Die Remissionsdifferenzen werden rechnerisch durch Subtraktion der Remissionen nach der Wäsche von den Remissionen vor der Wäsche ermittelt (delta R = R(nach der Wäsche)[%] - R (vor der Wäsche) [%]). Die Remissionen der Läppchen vor der Wäsche wurden vor der Versuchsreihe mit dem gleichen Weißgradmeßgerät bestimmt. Es wird ein Mittelwert der Remissionsdifferenzen der Läppchen berechnet.

Beispiel 1 (Vergleich)

1600 kg Wasserglas mit einem Verhältnis $SiO_2/Na_2O$ von 2,06 und einem Aktivstoffgehalt von 45,5 % wurden mit 36,8 kg Natronlauge (48 %-ig) versetzt und in einem Sprühturm der Fa. Kestner sprühgetrocknet zu einem amorphen Natriumsilikat mit einem Aktivstoffgehalt von 83 %. 15 kg des amorphen Natriumsilikates werden in einem Muffelofen (Fa. Nabertherm, Typ W1000/H) bei 720°C 90 min getempert. Eine zweite Charge wird genauso behandelt. Die erkalteten Materialien (ca. 24 kg) werden mit einem Backenbrecher und einer Scheibenmühle pulverisiert.

Beispiel 2 (Vergleich)

Von diesem Material werden ca. 6 kg entsprechend der allgemeinen Vorschrift zur Kompaktierung von Natriumsilikaten kompaktiert. Es werden 2,1 kg Gutkorn, 2,7 kg Überkorn, 1,2 kg Unterkorn erhalten.

Beispiel 3 (Vergleich)

7 kg SKS-6 Pulver werden 15 min mit einer Kugelmühle U 280A0 der Fa. Welte gemahlen, die innen metallausgekleidet ist und deren Trommel sich mit ca. 50 U/min dreht. Als Mahlkörper werden 44 kg Porzellankugeln eingesetzt.

Beispiel 4

50 kg Wasserglas mit einem Verhältnis $SiO_2/Na_2O$ von 2,06 und einem Aktivstoffgehalt von 45,5 % wurden mit 0,612 kg Natronlauge (48 %-ig) versetzt und in einem Laborzerstäubungstrocker (Sprühturm) der Fa. Anhydro sprühgetrocknet zu einem amorphen Natriumsilikat mit einem Aktivstoffgehalt von 84 %. 15 kg des amorphen Natriumsilikates werden in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

Beispiel 5

50 kg Wasserglas mit einem Verhältnis $SiO_2/Na_2O$ von 2,06 und einem Aktivstoffgehalt von 45,5 % wurden mit 0,404 kg Natronlauge (48 %-ig) versetzt und in einem Laborzerstäubungstrocker (Sprühturm) der Fa. Anhydro sprühgetrocknet zu einem amorphen Natriumsilikat mit einem Aktivstoffgehalt von 84 %. 15 kg des amorphen Natriumsilikates werden in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

**Beispiel 6**

50 kg Wasserglas mit einem Verhältnis $SiO_2/Na_2O$ von 2,06 und einem Aktivstoffgehalt von 45,5 % wurden mit 0,2 kg Natronlauge (48 %ig) versetzt und in einem Laborzerstäubungstrocker (Sprühturm) der Fa. Anhydro sprühgetrocknet zu einem amorphen Natriumsilikat mit einem Aktivstoffgehalt von 84 %. 15 kg des amorphen Natriumsilikates werden in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

Beispiel 7

1500 kg Wasserglas mit einem Verhältnis $SiO_2/Na_2O$ von 2,06 und einem Aktivstoffgehalt von 45,5 % wurden in einem Sprühturm der Fa. Kestner sprühgetrocknet zu einem amorphen Natriumsilikat mit einem Aktivstoffgehalt von 84 %. 15 kg des amorphen Natriumsilikates werden in einem Muffelofen (Fa. Nabertherm, Typ W1000/H) bei 720°C 90 min getempert. Das wird noch einmal wiederholt. Die erkalteten Materialien (ca. 22 kg) werden mit einem Backenbrecher und einer Scheibenmühle pulverisiert.

Beispiel 8

Von diesem Material werden ca. 6 kg entsprechend der allgemeinen Vorschrift zur Kompaktierung von Natriumsilikaten kompaktiert. Es werden 2,4 kg Gutkorn, 2,4 kg Überkorn, 1,2 kg Unterkorn erhalten.

Beispiel 9

50 kg Wasserglas mit einem Verhältnis $SiO_2/Na_2O$ von 3,45 und einem Aktivstoffgehalt von 36,1 % (Typ Na 4/1 der Fa. Clariant France S.A.) wurden mit 6,51 kg Natronlauge (48 %-ig) versetzt und in einem Laborzerstäubungstrocker (Sprühturm) der Fa. Anhydro sprühgetrocknet zu einem amorphen Natriumsilikat mit einem Aktivstoffgehalt von 83 %. 15 kg des amorphen Natriumsilikates werden in einem Muffelofen (Fa. Nabertherm, Typ W1000/H) bei 720°C 90 min getempert. Das erkaltete Material (ca. 10 kg) werden mit einem Backenbrecher und einer Scheibenmühle pulverisiert.

Beispiel 10

50 kg Wasserglas mit einem Verhältnis $SiO_2/Na_2O$ von 3,45 und einem Aktivstoffgehalt von 36,1 % (Typ Na 4/1 der Fa. Clariant France S.A.) wurden mit 5,66 kg Natronlauge (48 %ig) versetzt und in einem Laborzerstäubungstrocker (Sprühturm) der Fa. Anhydro sprühgetrocknet zu einem amorphen Natriumsilikat mit einem Aktivstoffgehalt von 84 %. 15 kg des amorphen Natriumsilikates werden in einem Muffelofen (Fa. Nabertherm, Typ W1000/H) bei 720°C 90 min getempert. Das erkaltete Material (ca. 10 kg) werden mit einem Backenbrecher und einer Scheibenmühle pulverisiert.

Beispiel 11 (Vergleich)

Entsprechend der allgemeinen Vorschrift "Herstellung der Testwaschmittel" wurde ein Test-Ultracompact-Vollwaschmittel mit 30,0 % kommerziell käuflichem Zeolith hergestellt. Die Vorschrift wurde insoweit angepaßt, daß die optischen Aufheller in einem Viertel des Alkylethoxylates (AE) angerührt und mit einem Drittel der Sodamenge gemischt werden. Der Rest Soda, das Polymer und der gesamte Zeolith werden im Lödige-Mischer gemischt und der Rest AE aufgesprüht. Danach werden alle anderen Komponenten außer Enzyme, TAED und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 3,30 %, Waschwirkung 15,9 %.

Beispiel 12 (Vergleich)

Entsprechend der allgemeinen Vorschrift "Herstellung der Testwaschmittel" wurde ein Test-Ultracompact-Vollwaschmittel mit 10,0 % des Silikates aus Beispiel 1 hergestellt. Die Vorschrift wurde insoweit angepaßt, daß der Rest Soda, das Polymer und der gesamte Zeolith im Lödigemischer gemischt werden, dann die Hälfte des verbliebenen AE's aufgesprüht wird, dann das Silikat aus Beispiel 1 untergemischt und schließlich der Rest AE aufgesprüht wird. Danach werden alle anderen Komponenten außer Enzyme, TAED und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,54 %, Waschwirkung 18,1 %.

Beispiel 13

Entsprechend der allgemeinen Vorschrift "Herstellung der Testwaschmittel" wurde ein Test-Ultracompact-Vollwaschmittel mit 10,0% des Silikates aus Beispiel 4 hergestellt. Die Vorschrift wurde insoweit angepaßt, daß der Rest Soda, das Polymer und der gesamte Zeolith im Lödigemischer gemischt werden, dann die Hälfte des verbliebenen AE's aufgesprüht wird, dann das Silikat aus Beispiel 4 untergemischt und schließlich der Rest AE aufgesprüht wird. Danach werden alle anderen Komponenten außer Enzyme, TAED und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,41 %, Waschwirkung 17,7 %.

Beispiel 14

Entsprechend der allgemeinen Vorschrift "Herstellung der Testwaschmittel" wurde ein Test-Ultracompact-Vollwaschmittel mit 10,0 % des Silikates aus Beispiel 7 hergestellt. Die Vorschrift wurde insoweit angepaßt, daß der Rest Soda, das Polymer und der gesamte Zeolith im Lödigemischer gemischt werden, dann die Hälfte des verbliebenen AE's aufgesprüht wird, dann das Silikat aus Beispiel 7 untergemischt und schließlich der Rest AE aufgesprüht wird. Danach werden alle anderen Komponenten außer Enzyme, TAED und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,97 %, Waschwirkung 18,2 %.

Beispiel 15

Entsprechend der allgemeinen Vorschrift "Herstellung der Testwaschmittel" wurde ein Test-Ultracompact-Vollwaschmittel mit 10,0 % des Silikates aus Beispiel 8 hergestellt. Die Vorschrift wurde insoweit angepaßt, daß der Rest Soda, das Polymer und der gesamte Zeolith im Lödigemischer gemischt werden, dann die Hälfte des verbliebenen AE's aufgesprüht wird, dann das Silikat aus Beispiel 8 untergemischt und schließlich der Rest AE aufgesprüht wird. Danach werden alle anderen Komponenten außer Enzyme, TAED und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,63 %, Waschwirkung 18,5 %.

Beispiel 16

Entsprechend der allgemeinen Vorschrift "Herstellung der Testwaschmittel" wurde ein Test-Ultracompact-Vollwaschmittel mit 47 % des Silikates aus Beispiel 4 hergestellt. Die Vorschrift wurde insoweit angepaßt, daß die optischen Aufheller in einem Viertel des Alkylethoxylates (AE) angerührt und mit zwei Dritteln der Bicarbonatmenge gemischt werden. Der Rest Bicarbonat und die Gesamtmenge des Silikates aus Beispiel 4 werden im Lödige-Mischer gemischt und der Rest AE aufgesprüht. Danach werden alle anderen Komponenten außer Enzyme, TAED und Percarbonat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,13 %, Waschwirkung 23,2 %.

Beispiel 17

Entsprechend der allgemeinen Vorschrift "Herstellung der Testwaschmittel" wurde ein Test-Normal-Vollwaschmittel mit 10 % des Silikates aus Beispiel 7 hergestellt. Die Vorschrift wurde insoweit angepaßt, daß die optischen Aufheller in der Gesamtmenge des Alkylethoxylates (AE) angerührt und mit einem Drittel der Sulfatmenge gemischt werden. Der Rest Sulfat, das Phosphat und die Gesamtmenge des Silikates aus Beispiel 7 werden im Lödige-Mischer gemischt. Danach werden alle anderen Komponenten außer Enzyme und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,10 %, Waschwirkung 17,5 %.

Beispiel 18

Entsprechend der allgemeinen Vorschrift "Herstellung der Testwaschmittel" wurde ein Test-Normal-Vollwaschmittel mit 4 % des Silikates aus Beispiel 8 hergestellt. Die Vorschrift wurde insoweit angepaßt, daß die optischen Aufheller in der Hälfte des Alkylethoxylates (AE) angerührt und mit zwei Dritteln der Sulfatmenge gemischt werden. Der Rest Sulfat, die Soda, das Polymer, der gesamte Zeolith und das Silikat aus Beispiel 8 werden im Lödigemischer gemischt, dann das verbliebene AE's aufgesprüht. Danach werden alle anderen Komponenten außer Enzyme, TAED und Perborat untergemischt. Diese werden danach im Taumelmischer unter das im Lödigemischer hergestellte Gemisch untergemischt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,34 %, Waschwirkung 16,9 %.

Beispiel 19

Entsprechend der allgemeinen Vorschrift "Herstellung der Testwaschmittel" wurde ein Test-Wasserenthärter mit 15 % des Silikates aus Beispiel 8 hergestellt. Die Vorschrift wurde insoweit angepaßt, daß der gesamte Zeolith, das Polymer, das Bicarbonat, die Citronensäure, das Sulfat und das Silikat aus Beispiel 8 im Lödigemischer gemischt werden und dann das AE aufgesprüht wird. Danach werden die restlichen Komponenten untergemischt. Entsprechend den allgemeinen Vorschriften "Waschversuche", "Bestimmung der anorganischen Inkrustierung" und "Bestimmung der Waschwirkung" wurde in Modellwaschversuchen an einer Kombination von handelsüblichem Ultracompactwaschmittel (Dosierung 55 g, mittlere Verschmutzung, geringste Wasserhärte) und Test-Wasserenthärter (Dosierung 30 g) die Bildung von anorganischen Inkrustierungen und die Waschwirkung untersucht: Anorganische Inkrustierung 1,64 %, Waschwirkung 16,4 %.

Beispiele 20 bis 23

Entsprechend der allgemeinen Vorschrift "Herstellung der Maschinengeschirreiniger" wurden Maschinengeschirreiniger hergestellt.

| | |
|---|---|
| Zeolith A: | Wessalith P, Fa. Degussa |
| Phosphat 1: | Natriumtripolyphosphat z.B. von Fa. Thermphos Intl. |
| Phosphat 2: | Makrophos 1018, Fa. BK Giulini |
| Phosphat 3: | Thermphos NW grob |
| Polymer: | Sokalan CP5, Fa. BASF |
| Soda: | Schwersoda, Fa. Matthes&Weber |
| Bicarbonat: | Fa. Solvay |
| Percarbonat: | Oxyper C, Fa. Solvay Interox |
| Perboratmonohydrat (Perborat mh): | Fa. Degussa |
| Perborat tetrahydrat (Perborat th): | Fa. Degussa |
| TAED 1: | TAED 4049, Fa. Clariant |
| TAED 2: | TAED 3873, Fa. Clariant |
| LAS: | Marlon ARL, Fa. Hüls |
| AE 1: | Genapol OAA 080, Fa. Clariant |
| AE 2: | Genapol 2822, Fa. Clariant |
| Seife: | Liga Grundseife HM11 E |
| Antischaum: | 11.Plv.ASP3, Fa. Wacker |
| Enzym 1: | Termamyl 60T, Fa. Solvay Enzymes |
| Enzym 2: | Savinase 6.0 TW, Fa. Solvay Enzymes |
| Optischer Aufheller 1: | Tinopal CBS-X, Fa. Ciba |
| Optischer Aufheller 2: | Tinopal DMS-X, Fa. Ciba |
| Phosphonat 1: | Dequest 2041, Fa. Monsanto |
| Phosphonat 2: | Dequest 200, Fa. Monsanto |
| Citronensäure: | Fa. Jungbunzlauer |
| Polyvinylpyrrolidon: | Sokalan HP50, Fa. BASF |
| Soil release Polymer: | SRC 1, Fa. Clariant |
| CMC: | Tylose 2000, Fa. Clariant |
| Cellulose: | Arbocell, Fa. Rettenmaier |
| Sulfat: | Fa. Solvay |
| Natriumacetattrihydrat: | Fa. Riedel-de Haen |
| Parfüm: | Citronenparfüm 78122D, Fa Orissa |
| Natriumhydroxid: | Microprills 100%, Fa. Riedel-de Haen |
| Alkansulfonat: | Hostapur SAS 60, Fa. Clariant |
| Wasserglas: | 45,5% Aktivsubstanz, Modul 2,0, Fa. Clariant France |
| Phosphorsäureester: | Hordaphos 158, Fa. Clariant |
| Natriumhypochlorit: | Fa. Celanese GmbH |

Tabelle 1

| Beispiel | | 1 | 2 | 3 | 4 | 5 | 6 | 7 | 8 | 9 | 10 |
|---|---|---|---|---|---|---|---|---|---|---|---|
| A* | [%] | 12,5 | - | - | 11,3 | 12,5 | 14,0 | 13,3 | - | 9,2 | 11,2 |
| B* | [%] | 9,1 | - | - | 8,5 | 5,8 | 2,8 | 8,3 | - | 6,8 | 5,2 |
| D* | [%] | 71,7 | - | - | 74,4 | 77,9 | 76,6 | 70,2 | - | 74,0 | 71,0 |
| AM* | [%] | 6,7 | - | - | 5,8 | 3,8 | 6,6 | 8,2 | - | 10,0 | 12,7 |
| y/x | | 1,40 | - | - | 1,98 | 2,56 | 2,70 | 2,96 | - | 5,87 | 8,67 |
| e/a | | 1,95 | - | - | 2,00 | 2,02 | 2,04 | 2,06 | - | 2,18 | 2,29 |
| Ant. >1180μm | [%] | - | 2,40 | - | - | - | - | - | 1,90 | - | - |
| Ant. >1000μm | [%] | 4,2 | 15,4 | - | 3,7 | 4,3 | 3,3 | 3,6 | 13 | 3,1 | 3,5 |
| Ant. >710pm | [%] | - | 49,5 | - | - | - | - | - | 45,3 | - | - |
| Ant. >500μm | [%] | 18,7 | - | - | 18,1 | 19,5 | 17,5 | 18,8 | | 18,1 | 12,9 |

(fortgesetzt)

| Beispiel | | 1 | 2 | 3 | 4 | 5 | 6 | 7 | 8 | 9 | 10 |
|---|---|---|---|---|---|---|---|---|---|---|---|
| Ant. >425µm | [%] | - | 82,2 | - | - | - | - | - | 77,8 | - | - |
| Ant. >300µm | [%] | 28,1 | - | - | 27,4 | 29 | 26,8 | 28 | | 26,9 | 20,2 |
| Ant. >212µm | [%] | - | 97,2 | - | - | - | - | - | 95,7 | - | - |
| Ant. >150µm | [%] | 46,5 | 98,3 | - | 45,8 | 48,4 | 46,7 | 47,2 | 97 | 45,3 | 39,5 |
| Ant. >75µm | [%] | 85,4 | - | 19,3 | 83,9 | 74,7 | 74,5 | 76,7 | | 96,9 | 66,1 |
| Ant. >53µm | [%] | - | - | 32,4 | - | - | - | - | - | - | - |
| Ant. >33µm | [%] | - | - | 48,7 | - | - | - | - | - | - | - |
| Ant. >20µm | [%] | - | - | 65 | - | - | - | - | - | - | - |
| $d_{50}$ | [µm] | 143 | 705 | 32,6 | 141 | 146 | 141 | 143 | 669 | 136 | 120 |
| Löslichkeit | [%] | 58,4 | 84 | 75 | 39,6 | 50,2 | 41,6 | 34 | 50 | 24,5 | 8,82 |
| CBV | [mgCaCO$_3$/g] | 209 | 219 | 216 | 207 | 208 | 211 | 209 | 217 | 208 | 207 |
| A*, B* und C* bezeichnen jeweils den Gehalt an alpha-, beta und delta-Dinatriumdisilikat, wobei AM* für den Anteil an nicht-schichtsilikatischen Natriumsilikaten steht. | | | | | | | | | | | |

Tabelle 2

| Beispiele | | 11 | 12 | 13 | 14 | 15 | 16 | 17 | 18 | 19 |
|---|---|---|---|---|---|---|---|---|---|---|
| | | | | | | | | | | |
| Zeolith A | [%] | 30 | 20 | 20 | 20 | 20 | - | - | 20 | 40 |
| Phosphat | [%] | - | - | - | - | - | - | 20 | - | - |
| Silikat aus Bsp. 1 | [%] | - | 10 | - | - | - | - | - | - | - |
| Silikat aus Bsp.4 | [%] | - | - | 10 | - | - | 47 | - | - | - |
| Silikat aus Bsp. 7 | [%] | - | - | - | 10 | - | - | 10 | - | - |
| Silikat aus Bsp.8 | [%] | - | - | - | - | 10 | - | - | 4 | 15 |
| Silikat aus Bsp.9 | [%] | - | - | - | - | - | - | - | - | - |
| Polymer | [%] | 5 | 5 | 5 | 5 | 5 | - | - | 3 | 7 |
| Soda | [%] | 17 | 17 | 17 | 17 | 17 | - | - | 20 | - |
| Bicarbonat | [%] | - | - | - | - | - | 15 | - | - | 15 |
| Perborat mh | [%] | 18 | 18 | 18 | 18 | 18 | - | - | - | - |
| Perborat th | [%] | - | - | - | - | - | - | 25 | 20 | - |
| Percarbonat | [%] | - | - | - | - | - | 18 | - | - | - |
| TAED | [%] | 5 | 5 | 5 | 5 | 5 | 5 | - | 2,5 | - |
| LAS | [%] | 10 | 10 | 10 | 10 | 10 | - | 6,7 | 10 | - |
| AE | [%] | 8 | 8 | 8 | 8 | 8 | 10 | 2,2 | 5 | 2 |
| Seife | [%] | 2 | 2 | 2 | 2 | 2 | - | - | - | 2 |

(fortgesetzt)

| Beispiele | | 11 | 12 | 13 | 14 | 15 | 16 | 17 | 18 | 19 |
|---|---|---|---|---|---|---|---|---|---|---|
| Antischaum | [%] | 1 | 1 | 1 | 1 | 1 | 1 | 0,6 | 0,6 | - |
| Enzym 1 | [%] | 1,5 | 1,5 | 1,5 | 1,5 | 1,5 | 1,5 | 0,6 | 0,6 | - |
| Enzym 2 | [%] | 1,5 | 1,5 | 1,5 | 1,5 | 1,5 | 1,5 | 0,6 | 0,6 | - |
| Opt. Aufheller 1 | [%] | 0,25 | 0,25 | 0,25 | 0,25 | 0,25 | 0,25 | 0,10 | 0,10 | - |
| Opt. Aufheller 2 | [%] | 0,25 | 0,25 | 0,25 | 0,25 | 0,25 | 0,25 | 0,10 | 0,10 | - |
| Phosphonat | [%] | 0,5 | 0,5 | 0,5 | 0,5 | 0,5 | 0,5 | 0,2 | 0,2 | - |
| Citronensäure | [%] | - | - | - | - | - | - | - | - | 5 |
| Polyvinyl-pyrrolidon | [%] | - | - | - | - | - | - | - | - | - |
| Soil release polymer | [%] | - | - | - | - | - | - | - | - | - |
| CMC | [%] | - | - | - | - | - | - | - | - | - |
| Cellulose | [%] | - | - | - | - | - | - | - | - | - |
| Sulfat | [%] | - | - | - | - | - | - | 33,9 | 13,3 | 14 |
| Natriumacetat, fest | [%] | - | - | - | - | - | - | - | - | - |
| Dosierung | [%] | 65 | 65 | 65 | 65 | 65 | 65 | 135 | 135 | 30+55 |
| Anorg. Inkrustierung | [%] | 3,30 | 2,54 | 2,41 | 1,97 | 1,63 | 2,13 | 2,10 | 2,34 | 1,64 |
| Waschwirkung | [%] | 15,9 | 18,1 | 17,7 | 18,2 | 18,5 | 23,2 | 17,5 | 16,9 | 16,4 |

Tabelle 3

| | | Beispiele | | | |
|---|---|---|---|---|---|
| | | 20 | 21 | 22 | 23 |
| Phosphat 2 | [%] | | 25,0 | 40,0 | 47,0 |
| Silikat aus Bsp. 8 | [%] | 20,0 | 15,0 | 15,0 | 5,2 |
| Soda | [%] | 22,7 | 30,0 | 24,7 | 27,5 |
| Natriumcitrat trihydrat | [%] | 30,0 | | | |
| Percarbonat | [%] | 10,0 | | | |
| Perborat monohydrat | [%] | | 10,0 | 10,0 | 10,0 |
| Polymer | [%] | 7,5 | 5,0 | 3,5 | 3,5 |
| TAED 2 | [%] | 5,0 | 2,0 | 2,0 | 2,0 |
| Enzym 1 | [%] | 1,0 | 1,5 | 1,0 | 1,0 |
| Enzym 2 | [%] | 2,0 | 2,5 | 2,0 | 2,0 |
| AE 2 | [%] | 1,5 | 1,5 | 1,5 | 1,5 |
| Parfüm | [%] | 0,3 | 1,5 | 0,3 | 0,3 |
| Sulfat | [%] | | 6,0 | | |
| Dosierung | [ml] | 25 | 25 | 25 | 25 |

**Patentansprüche**

1. Schwerlösliches Alkalisilikat, **dadurch gekennzeichnet, dass** es Alkalischichtsilikat in fein verteilter Form eingebettet in 0,1 bis 40 Gew.-% einer nicht-schichtsilikatischen Matrix der Formel x $M^1_2O \cdot y\ SiO_2$ , in der $M^1$ ein Alkalimetall und y/x (1,9 bis 500) : 1 bedeutet, enthält, wobei das schwerlösliche Alkalisilikat 1 bis 40 Gew.-% alpha-Dinatriumdisilikat, 0 bis 60 Gew.-% beta-Dinatriumdisilikat, 10 bis 77 Gew.-% delta-Dinatriumdisilikat enthält.

2. Schwerlösliches Alkalisilikat nach Anspruch 1, **dadurch gekennzeichnet**, ☐ass es insgesamt der allgemeinen Formel

$$a\ M^I_2O \cdot b\ M^{II}_O \cdot c\ X_2O_3 \cdot d\ Z_2O_5 \cdot e\ SiO_2 \cdot f\ H_2O$$

entspricht, in der $M^I$ ein Alkalimetall, $M^{II}$ ein Erdalkalimetall, X ein Element der dritten Hauptgruppe und Z ein Element der fünften Hauptgruppe des Periodensystems bedeuten und weiterhin gilt:

$0 < a \leq 1$

$0 \leq b \leq 0,5$

$0 \leq c/e \leq 0,05$

$0 \leq d/e \leq 0,25$

$1,9 \leq e \leq 4$

$0 \leq f \leq 20.$

3. Schwerlösliches Alkalisilikat nach Anspruch 2, **dadurch gekennzeichnet**, ☐ass

$0 < a \leq 1;$

$b = 0;$

$c/e = 0;$

$d/e = 0;$

$1,9 \leq e \leq 4;$

$0 \leq f \leq 20$ ist.

4. Schwerlösliches Alkalisilikat nach einem oder mehreren der Ansprüche 1 bis 3, **dadurch gekennzeichnet, daß** y/x (2,0 bis 200) zu 1 bedeutet.

5. Schwerlösliches Alkalisilikat nach einem oder mehreren der Ansprüche 1 bis 4, **dadurch gekennzeichnet, daß** $M^I$ Natrium bedeutet.

6. Schwerlösliches Alkalisilikat nach einem oder mehreren der Ansprüche 1 bis 5, **dadurch gekennzeichnet, daß** die nicht-schichtsilikatischen Alkalisilikatumgebung aus nicht-schichtsilikatischen Natriumsilikaten zusammengesetzt ist.

7. Schwerlösliches Alkalisilikat nach einem oder mehreren der Ansprüche 1 bis 6, **dadurch gekennzeichnet, daß** das Alkalischichtsilikat aus schichtförmigen kristallinen Dinatriumdisilikaten zusammengesetzt ist.

8. Schwerlösliches Alkalisilikat nach einem oder mehreren der Ansprüche 1 bis 7, **dadurch gekennzeichnet, daß** es, bezogen auf den Alkalisilikatgehalt, bis zu 10 Gew.-% an weiteren Bestandteilen enthält.

9. Schwerlösliches Alkalisilikat nach einem oder mehreren der Ansprüche 1 bis 8, **dadurch gekennzeichnet, daß** es sich bei den weiteren Bestandteilen um kationische und/oder anionische Bestandteile handelt.

10. Schwerlösliches Alkalisilikat nach einem oder mehreren der Ansprüche 1 bis 9, **dadurch gekennzeichnet, daß** es sich bei den kationischen Bestandteilen um Alkalimetallionen und/oder Erdalkalimetallkationen und/oder Fe, W, Mo, Ta, Pb, Sn, Al, Zn, Ti, V, Cr, Mn, Co und/oder Ni handelt.

11. Schwerlösliches Alkalisilikat nach einem oder mehreren der Ansprüche 1 bis 10, **dadurch gekennzeichnet, daß** es sich bei den anionischen Bestandteilen um Sulfate, Fluoride, Chloride, Bromide, Iodide, Carbonate, Hydrogen-carbonate, Nitrate, Oxidhydrate, Phosphate und/oder Borate handelt.

12. Schwerlösliches Alkalisilikat nach einem oder mehreren der Ansprüche 1 bis 11, **dadurch gekennzeichnet, daß** das schwerlösliches Alkalisilikat bis zu 10 Mol-% Bor, bezogen auf den Gesamtgehalt an $SiO_2$, enthält.

13. Schwerlösliches Alkalisilikat nach einem oder mehreren der Ansprüche 1 bis 12, **dadurch gekennzeichnet, daß** das schwerlösliches Alkalisilikat bis zu 50 Mol-% Phosphor, bezogen auf den Gesamtgehalt an $SiO_2$, enthält.

**14.** Schwerlösliches Alkalisilkat nach einem oder mehreren der Ansprüche 1 bis 13, **dadurch gekennzeichnet, daß** es als Pulver einen mittleren Teilchendurchmesser von 0,1 bis 150 μm aufweist.

**15.** Schwerlösliches Alkalisilikat nach einem oder mehreren der Ansprüche 1 bis 14, **dadurch gekennzeichnet, daß** es als kompaktiertes Granulat einen mittleren Teilchendurchmesser von 10 bis 2000 μm aufweist.

**16.** Verfahren zur Herstellung von schwerlöslichen Alkalisilikaten nach einem oder mehreren der Ansprüche 1 bis 15, **dadurch gekennzeichnet, daß** man ein Natriumsilikathaltiges Ausgangsmaterial mit einer oder mehreren Verbindungen, die die Komponenten M$^{I}$, M$^{II}$, X und/oder Z enthalten, vermischt und zur Kristallisation bringt.

**17.** Verfahren nach Anspruch 16, **dadurch gekennzeichnet, daß** man als Natriumsilikathaltiges Ausgangsmaterial Wasserglas einsetzt.

**18.** Verfahren nach Anspruch 17, **dadurch gekennzeichnet, daß** man Wasserglas mit Natronlauge, Wasserglas oder anderen Silikatquellen mischt, sprühtrocknet und zur Kristallisation bringt.

**19.** Verfahren nach einem oder mehreren der Ansprüche 10 bis 18, **dadurch gekennzeichnet, daß** die Kristallisationstemperatur 700 bis 1300 K beträgt.

**20.** Wasch- und Reinigungsmittel, **dadurch gekennzeichnet, daß** es ein schwerlösliches Alkalisilikat nach einem oder mehreren der Ansprüche 1 bis 15 enthält.

**21.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% Cobuilder
ad 100 Gew.-% weitere übliche Inhaltsstoffe enthält.

**22.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% Cobuilder
0,5 bis 80 Gew.-% pH-Regulatoren
ad 100 Gew.-% weitere übliche Inhaltsstoffe enthält.

**23.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% Cobuilder
0,5 bis 80 Gew.-% pH-Regulatoren
1 bis 50 Gew.-% grenzflächenaktive Substanzen
ad 100 Gew.-% weitere übliche Inhaltsstoffe enthält.

**24.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% Cobuilder
0,5 bis 80 Gew.-% pH-Regulatoren
1 bis 50 Gew.-% grenzflächenaktive Substanzen
1 bis 70 Gew.-% Bleichsystem
ad 100 Gew.-% weitere übliche Inhaltsstoffe enthält.

**25.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% Cobuilder
0,5 bis 80 Gew.-% pH-Regulatoren
1 bis 70 Gew.-% Bleichsystem
ad 100 Gew.-% weitere übliche Inhaltsstoffe enthält.

**26.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% pH-Regulatoren

1 bis 50 Gew.-% grenzflächenaktive Substanzen
1 bis 70 Gew.-% Bleichsystem
ad 100 Gew.-% weitere übliche Inhaltsstoffe enthält.

**27.** Wasch- und Reinigungsmittel nach Anspruch 20, **dadurch gekennzeichnet, daß** es
0,5 bis 98 Gew.-% schwerlösliches Alkalisilikat
0,5 bis 80 Gew-% pH-Regulatoren
1 bis 70 Gew.-% Bleichsystem
ad 100 Gew.-% weitere übliche Inhaltsstoffe enthält.

**28.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% pH-Regulatoren
1 bis 40 Gew.-% grenzflächenaktive Substanzen
ad 100 Gew.-% weitere übliche Inhaltsstoffe enthält.

**29.** Wasch- und Reinigungsmittel nach Anspruch 20, **dadurch gekennzeichnet, daß** es
0,5 bis 98 Gew.-% schwerlösliches Alkalisilikat
0,5 bis 80 Gew.-% pH-Regulatoren
ad 100 Gew.-% weitere übliche Inhaltsstoffe enthält.

**30.** Wasch- und Reinigungsmittel nach Anspruch 20, **dadurch gekennzeichnet, daß** es
0,5 bis 98 Gew.-% schwerlösliches Alkalisilikat
1 bis 70 Gew.-% Bleichsystem
ad 100 Gew.-% weitere übliche Inhaltsstoffe enthält.

**31.** Wasch- und Reinigungsmittel nach einem oder mehreren der Ansprüche 20 bis 30, **dadurch gekennzeichnet, daß** der Gehalt an schwerlöslichem Alkalisilikat 1 bis 50 Gew.-% beträgt.

**32.** Wasch- und Reinigungsmittel nach einem oder mehreren der Ansprüche 20 bis 301, **dadurch gekennzeichnet, daß** der Gehalt an schwerlöslichem Alkalisilikat 60 bis 98 Gew.-% beträgt.

**33.** Wasch- und Reinigungsmittel nach einem oder mehreren der Ansprüche 20 bis 32, **dadurch gekennzeichnet, daß** es sich bei den Cobuildern um kristalline Aluminosilikate, mono-, oligo- oder polymere Carbonsäuren, Alkalicarbonate, Alkaliortho-, -pyro-, polyphosphate, kristalline Alkalisilikate mit einem Kristallgitter ohne Schichtstruktur und/oder amorphe Alkalisilikate handelt.

**34.** Wasch- und Reinigungsmittel nach einem oder mehreren der Ansprüche 20 bis 33, **dadurch gekennzeichnet, daß** es sich bei dem Bleichsystem um Aktivchlor- und/oder Aktivsauerstoffträger, Bleichaktivator, -katalysator, zur Entfernung von Verfärbungen einsetzbare Enzyme, Perborat und/oder Percarbonat handelt.

**35.** Wasch- und Reinigungsmittel nach einem oder mehreren der Ansprüche 20 bis 34, **dadurch gekennzeichnet, daß** es sich bei den grenzflächenaktiven Substanzen um anionische, kationische, nicht-ionische und/oder zwitterionischeTenside handelt.

**36.** Wasch- und Reinigungsmittel nach einem oder mehreren der Ansprüche 20 bis 35, **dadurch gekennzeichnet, daß** es sich bei den pH-Regulatoren um Soda, Citronensäure, Natriumcitrat und/oder Bicarbonat handelt.

**Claims**

**1.** A sparingly soluble alkali metal silicate comprising alkali metal phyllosilicate in finely divided form embedded in 0.1 to 40% by weight of a non-phyllosilicatic matrix of the formula x $M^1_2O \cdot y\ SiO_2$, in which $M^1$ is an alkali metal and y/x is (1.9 to 500) : 1 the sparingly soluble alkali metal silicate comprising 1 to 40% by weight of alpha-disodium disilicate, 0 to 60% by weight of beta-disodium disilicate, 10 to 77% by weight of delta-disodium disilicate.

**2.** The sparingly soluble alkali metal silicate as claimed in claim 1, which corresponds overall to the formula

$$a\ M^{I}_2O \cdot b\ M^{II}_O \cdot c\ X_2O_3 \cdot d\ Z_2O_5 \cdot e\ SiO_2 \cdot f\ H_2O$$

in which $M^{I}$ is an alkali metal, $M^{II}$ is an alkaline earth metal, X is an element of the third main group and Z is an element of the fifth main group of the Periodic Table of the Elements and the following also applies:

$0 < a \leq 1$
$0 \leq b \leq 0.5$
$0 \leq c/e \leq 0.05$
$0 \leq d/e \leq 0.25$
$1.9 \leq e \leq 4$
$0 \leq f \leq 20$.

3. The sparingly soluble alkali metal silicate as claimed in claim 2, wherein

$0 < a \leq 1$;
$b = 0$;
$c/e = 0$;
$d/e = 0$;
$1.9 \leq e \leq 4$;
$0 \leq f \leq 20$.

4. The sparingly soluble alkali metal silicate as claimed in one or more of claims 1 to 3, wherein y/x is (2.0 to 200):1.

5. The sparingly soluble alkali metal silicate as claimed in one or more of claims 1 to 4, wherein $M^{I}$ is sodium.

6. The sparingly soluble alkali metal silicate as claimed in one or more of claims 1 to 5, wherein the non-phyllosilicatic alkali metal silicate environment is composed of non-phyllosilicatic sodium silicates.

7. The sparingly soluble alkali metal silicate as claimed in one or more of claims 1 to 6, wherein the alkali metal phyllosilicate is composed of sheet crystalline disodium disilicates.

8. The sparingly soluble alkali metal silicate as claimed in one or more of claims 1 to 7, which comprises, based on the content of alkali metal silicate, up to 10% by weight of further constituents.

9. The sparingly soluble alkali metal silicate as claimed in one or more of claims 1 to 8, wherein the further constituents are cationic and/or anionic constituents.

10. The sparingly soluble alkali metal silicate as claimed in one or more of claims 1 to 9, wherein the cationic constituents are alkali metal ions and/or alkaline earth metal cations and/or Fe, W, Mo, Ta, Pb, Sn, Al, Zn, Ti, V, Cr, Mn, Co and/or Ni.

11. The sparingly soluble alkali metal silicate as claimed in one or more of claims 1 to 10, wherein the anionic constituents are sulfates, fluorides, chlorides, bromides, iodides, carbonates, hydrogen carbonates, nitrates, oxide hydrates, phosphates and/or borates.

12. The sparingly soluble alkali metal silicate as claimed in one or more of claims 1 to 11, wherein the sparingly soluble alkali metal silicate comprises up to 10 mol% of boron, based on the total content of $SiO_2$.

13. The sparingly soluble alkali metal silicate as claimed in one or more of claims 1 to 12, wherein the sparingly soluble alkali metal silicate comprises up to 50 mol% of phosphorus, based on the total content of $SiO_2$.

14. The sparingly soluble alkali metal silicate as claimed in one or more of claims 1 to 13, which has, as powder, a mean particle diameter of from 0.1 to 150 $\mu$m.

15. The sparingly soluble alkali metal silicate as claimed in one or more of claims 1 to 14, which has, as compacted granulate, a mean particle diameter of from 10 to 2000 $\mu$m.

16. A process for the preparation of sparingly soluble alkali metal silicates as claimed in one or more of claims 1 to 15, which comprises mixing a sodium silicate-containing starting material with one or more compounds which comprise the components $M^{I}$, $M^{II}$, X and/or Z, and crystallizing the mixture.

**17.** The process as claimed in claim 16, wherein the sodium silicate-containing starting material used is water glass.

**18.** The process as claimed in claim 17, wherein water glass is mixed with sodium hydroxide solution, water glass or other silicate sources, spray-dried and crystallized.

**19.** The process as claimed in one or more of claims 10 to 18, wherein the crystallization temperature is 700 to 1300 K.

**20.** A detergent and cleaner which comprises a sparingly soluble alkali metal silicate as claimed in one or more of claims 1 to 15.

**21.** The detergent and cleaner as claimed in claim 20, which comprises
0.5 to 98% by weight of sparingly soluble alkali metal silicate
0.5 to 80% by weight of cobuilders
ad 100% by weight of further customary ingredients.

**22.** The detergent and cleaner as claimed in claim 20, which comprises
0.5 to 98% by weight of sparingly soluble alkali metal silicate
0.5 to 80% by weight of cobuilders
0.5 to 80% by weight of pH regulators
ad 100% by weight of further customary ingredients.

**23.** The detergent and cleaner as claimed in claim 20, which comprises
0.5 to 98% by weight of sparingly soluble alkali metal silicate
0.5 to 80% by weight of cobuilders
0.5 to 80% by weight of pH regulators
1 to 50% by weight of surface-active substances
ad 100% by weight of further customary ingredients.

**24.** The detergent and cleaner as claimed in claim 20, which comprises
0.5 to 98% by weight of sparingly soluble alkali metal silicate
0.5 to 80% by weight of cobuilders
0.5 to 80% by weight of pH regulators
1 to 50% by weight of surface-active substances
1 to 70% by weight of a bleaching system
ad 100% by weight of further customary ingredients.

**25.** The detergent and cleaner as claimed in claim 20, which comprises
0.5 to 98% by weight of sparingly soluble alkali metal silicate
0.5 to 80% by weight of cobuilders
0.5 to 80% by weight of pH regulators
1 to 70% by weight of a bleaching system
ad 100% by weight of further customary ingredients.

**26.** The detergent and cleaner as claimed in claim 20, which comprises
0.5 to 98% by weight of sparingly soluble alkali metal silicate
0.5 to 80% by weight of pH regulators
1 to 50% by weight of surface-active substances
1 to 70% by weight of a bleaching system
ad 100% by weight of further customary ingredients.

**27.** The detergent and cleaner as claimed in claim 20, which comprises
0.5 to 98% by weight of sparingly soluble alkali metal silicate
0.5 to 80% by weight of pH regulators
1 to 70% by weight of a bleaching system
ad 100% by weight of further customary ingredients.

**28.** The detergent and cleaner as claimed in claim 20, which comprises
0.5 to 98% by weight of sparingly soluble alkali metal silicate

0.5 to 80% by weight of pH regulators
1 to 40% by weight of surface-active substances
ad 100% by weight of further customary ingredients.

29. The detergent and cleaner as claimed in claim 20, which comprises
0.5 to 98% by weight of sparingly soluble alkali metal silicate
0.5 to 80% by weight of pH regulators
ad 100% by weight of further customary ingredients.

30. The detergent and cleaner as claimed in claim 20, which comprises
0.5 to 98% by weight of sparingly soluble alkali metal silicate
1 to 70% by weight of a bleaching system
ad 100% by weight of further customary ingredients.

31. The detergent and cleaner as claimed in one or more of claims 20 to 30, wherein the content of sparingly soluble alkali metal silicate is 1 to 50% by weight.

32. The detergent and cleaner as claimed in one or more of claims 20 to 30, wherein the content of sparingly soluble alkali metal silicate is 60 to 98% by weight.

33. The detergent and cleaner as claimed in one or more of claims 20 to 32, wherein the cobuilders are crystalline aluminosilicates, mono-, oligo- or polymeric carboxylic acids, alkali metal carbonates, alkali metal ortho-, pyro- or polyphosphates, crystalline alkali metal silicates having a crystal lattice without a layered structure and/or amorphous alkali metal silicates.

34. The detergent and cleaner as claimed in one or more of claims 20 to 33, wherein the bleaching system is an active chlorine and/or active oxygen carrier, bleach activator, bleach catalyst, enzymes useful to remove diskolorations, perborate and/or percarbonate.

35. The detergent and cleaner as claimed in one or more of claims 20 to 34, wherein the surface-active substances are anionic, cationic, nonionic and/or zwitterionic surfactants.

36. The detergent and cleaner as claimed in one or more of claims 20 to 35, wherein the pH regulators are soda, citric acid, sodium citrate and/or bicarbonate.

**Revendications**

1. Silicate alcalin difficilement soluble, **caractérisé en ce qu'**il contient du silicate lamellaire alcalin sous forme finement divisée dans 0,1 à 40 % en poids d'une matrice de silicate non lamellaire de formule x $M^1_2O \cdot y\ SiO_2$, dans laquelle $M^1$ signifie un métal alcalin et y/x (1,9 à 500) : 1, dans lequel le silicate alcalin difficilement soluble contient 1 à 40 % en poids d'alpha disilicate de disodium, 0 à 60 % en poids de bêta disilicate de disodium, 10 à 77 % en poids de delta disilicate de disodium.

2. Silicate alcalin difficilement soluble selon la revendication 1, **caractérisé en ce qu'**il correspond globalement à la formule générale

$$a\ M^I_2O \cdot b\ M^{II}_O \cdot c\ X_2O_3 \cdot d\ Z_2O_5 \cdot e\ SiO_2 \cdot f\ H_2O,$$

dans laquelle $M^I$ représente un métal alcalin, $M^{II}$ un métal alcalino-terreux, X un élément du troisième groupe principal et Z un élément du cinquième groupe principal du système périodique et en outre s'appliquent les valeurs :

$0 < a \leq 1$
$0 \leq b \leq 0,5$
$0 \leq c/e \leq 0,05$
$0 \leq d/e \leq 0,25$
$1,9 \leq e \leq 4$
$0 \leq f \leq 20.$

**3.** Silicate alcalin difficilement soluble selon la revendication 2, **caractérisé en ce que**

0 < a ≤ 1

b = 0

c/e = 0

d/e = 0

1,9 ≤ e ≤ 4

0 ≤ f ≤ 20.

**4.** Silicate alcalin difficilement soluble selon une ou plusieurs des revendications 1 à 3, **caractérisé en ce que** y/x représente (2,0 à 200) sur 1.

**5.** Silicate alcalin difficilement soluble selon une ou plusieurs des revendications 1 à 4, **caractérisé en ce que** $M^I$ représente le sodium.

**6.** Silicate alcalin difficilement soluble selon une ou plusieurs des revendications 1 à 5, **caractérisé en ce que** l'environnement de silicate alcalin de silicate non lamellaire est constitué de silicates de sodium non lamellaires.

**7.** Silicate alcalin difficilement soluble selon une ou plusieurs des revendications 1 à 6, **caractérisé en ce que** le silicate alcalin lamellaire est constitué de disilicates de disodium cristallins lamellaires.

**8.** Silicate alcalin difficilement soluble selon une ou plusieurs des revendications 1 à 7, **caractérisé en ce que**, par rapport à la teneur en silicate alcalin, il contient jusqu'à 10% en poids d'autres constituants.

**9.** Silicate alcalin difficilement soluble selon une ou plusieurs des revendications 1 à 8, **caractérisé en ce qu'**il s'agit pour les autres constituants de constituants cationiques et/ou anioniques.

**10.** Silicate alcalin difficilement soluble selon une ou plusieurs des revendications 1 à 9, **caractérisé en ce qu'**il s'agit pour les constituants cationiques d'ions de métaux alcalins et/ou d'ions de métaux alcalino-terreux et/ou de Fe, W, Mo, Ta, Pb, Sn, Al, Zn, Ti, V, Cr, Mn, Co et/ou Ni.

**11.** Silicate alcalin difficilement soluble selon une ou plusieurs des revendications 1 à 10, **caractérisé en ce qu'**il s'agit pour les constituants anioniques de sulfates, fluorures, chlorures, bromures, iodures, carbonates, hydrogénocarbonates, nitrates, oxyhydrates, phosphates et/ou borates.

**12.** Silicate alcalin difficilement soluble selon une ou plusieurs des revendications 1 à 11, **caractérisé en ce que** le silicate alcalin difficilement soluble contient jusqu'à 10 % en moles de bore, par rapport à la teneur globale en $SiO_2$.

**13.** Silicate alcalin difficilement soluble selon une ou plusieurs des revendications 1 à 12, **caractérisé en ce que** le silicate alcalin difficilement soluble contient jusqu'à 50 % en moles de phosphore, par rapport à la teneur globale en $SiO_2$.

**14.** Silicate alcalin difficilement soluble selon une ou plusieurs des revendications 1 à 13, **caractérisé en ce qu'**il présente comme poudre un diamètre moyen des particules de 0,1 à 150 μm.

**15.** Silicate alcalin difficilement soluble selon une ou plusieurs des revendications 1 à 14, **caractérisé en ce qu'**il présente comme granulat compacté un diamètre moyen des particules de 10 à 2000 μm.

**16.** Procédé pour la préparation de silicates alcalins difficilement solubles selon une ou plusieurs des revendications 1 à 15, **caractérisé en ce que** l'on mélange une matière première contenant du silicate de sodium avec un ou plusieurs composés, qui contiennent les composants $M^I$, $M^{II}$, X et/ou Z, et que l'on fait cristalliser le mélange.

**17.** Procédé selon la revendication 16, **caractérisé en ce que** l'on utilise comme matière première contenant du silicate de sodium du verre soluble.

**18.** Procédé selon la revendication 17, **caractérisé en ce que** l'on mélange du verre soluble avec de l'hydroxyde de sodium, du verre soluble ou d'autres sources de silicate, on lyophilise et on fait cristalliser.

**19.** Procédé selon une ou plusieurs des revendications 10 à 18, **caractérisé en ce que** la température de cristallisation s'élève de 700 à 1300 K.

**20.** Lessive et détergent, **caractérisé en ce qu'**il contient un silicate alcalin difficilement soluble selon une ou plusieurs des revendications 1 à 15.

**21.** Lessive et détergent selon la revendication 20, **caractérisé en ce qu'**il contient
0,5 à 98 % en poids de silicate alcalin difficilement soluble
0,5 à 80 % en poids de co-adjuvant
jusqu'à 100 % en poids d'autres constituants usuels.

**22.** Lessive et détergent selon la revendication 20,
**caractérisé en ce qu'**il contient
0,5 à 98 % en poids de silicate alcalin difficilement soluble,
0,5 à 80 % en poids de co-adjuvant
0,5 à 80 % en poids de régulateurs de pH
jusqu'à 100 % en poids d'autres constituants usuels.

**23.** Lessive et détergent selon la revendication 20, **caractérisé en ce qu'**il contient
0,5 à 98 % en poids de silicate alcalin difficilement soluble,
0,5 à 80 % en poids de co-adjuvant
0,5 à 80 % en poids de régulateurs de pH
1 à 50 % en poids de substances tensio-actives
jusqu'à 100 % en poids d'autres constituants usuels.

**24.** Lessive et détergent selon la revendication 20, **caractérisé en ce qu'**il contient
0,5 à 98 % en poids de silicate alcalin difficilement soluble,
0,5 à 80% en poids de co-adjuvant
0,5 à 80 % en poids de régulateurs de pH
1 à 50 % en poids de substances tensio-actives
1 à 70 % en poids de système de blanchiment
jusqu'à 100 % en poids d'autres constituants usuels.

**25.** Lessive et détergent selon la revendication 20, **caractérisé en ce qu'**il contient
0,5 à 98 % en poids de silicate alcalin difficilement soluble,
0,5 à 80 % en poids de co-adjuvant
0,5 à 80 % en poids de régulateurs de pH
1 à 70 % en poids de système de blanchiment
jusqu'à 100 % en poids d'autres constituants usuels.

**26.** Lessive et détergent selon la revendication 20, **caractérisé en ce qu'**il contient
0,5 à 98 % en poids de silicate alcalin difficilement soluble,
0,5 à 80 % en poids de régulateurs de pH
1 à 50 % en poids de substances tensio-actives
1 à 70 % en poids de système de blanchiment
jusqu'à 100 % en poids d'autres constituants usuels.

**27.** Lessive et détergent selon la revendication 20, **caractérisé en ce qu'**il contient
0,5 à 98 % en poids de silicate alcalin difficilement soluble,
0,5 à 80 % en poids de régulateurs de pH
1 à 70 % en poids de système de blanchiment
jusqu'à 100 % en poids d'autres constituants usuels.

**28.** Lessive et détergent selon la revendication 20, **caractérisé en ce qu'**il contient
0,5 à 98 % en poids de silicate alcalin difficilement soluble,
0,5 à 80 % en poids de régulateurs de pH
1 à 40 % en poids de substances tensio-actives
jusqu'à 100 % en poids d'autres constituants usuels.

**29.** Lessive et détergent selon la revendication 20, **caractérisé en ce qu'**il contient
0,5 à 98 % en poids de silicate alcalin difficilement soluble,
0,5 à 80 % en poids de régulateurs de pH
jusqu'à 100 % en poids d'autres constituants usuels.

**30.** Lessive et détergent selon la revendication 20, **caractérisé en ce qu'**il contient
0,5 à 98 % en poids de silicate alcalin difficilement soluble,
1 à 70 % en poids de système de blanchiment
jusqu'à 100 % en poids d'autres constituants usuels.

**31.** Lessive et détergent selon une ou plusieurs des revendications 20 à 30, **caractérisé en ce que** la teneur en silicate alcalin difficilement soluble s'élève à 1 à 50 % en poids.

**32.** Lessive et détergent selon une ou plusieurs des revendications 20 à 31, **caractérisé en ce que** la teneur en silicate alcalin difficilement soluble s'élève à 60 à 98 % en poids.

**33.** Lessive et détergent selon une ou plusieurs des revendications 20 à 32, **caractérisé en ce qu'**il s'agit pour les co-adjuvants d'aluminosilicates cristallins, d'acides mono-, oligocarboxyliques ou polymères, de carbonates alcalins, d'ortho-, -pyro-, polyphosphates alcalins avec un réseau cristallin sans structure lamellaire et/ou de silicates alcalins amorphes.

**34.** Lessive et détergent selon une ou plusieurs des revendications 20 à 33, **caractérisé en ce qu'**il s'agit pour le système de blanchiment de chlore actif et/ou de support d'oxygène actif, d'activateur, de catalyseur de blanchiment, d'enzymes, de perborate et/ou de percarbonate utilisables pour l'élimination des colorations.

**35.** Lessive et détergent selon une ou plusieurs des revendications 20 à 34, **caractérisé en ce qu'**il s'agit pour les substances tensio-actives d'agents tensioactifs anioniques, cationiques, non ioniques et/ou zwitterioniques.

**36.** Lessive et détergent selon une ou plusieurs des revendications 20 à 35, **caractérisé en ce qu'**il s'agit pour les régulateurs de pH d'hydroxyde de sodium, d'acide citrique, de citrate de sodium et/ou de bicarbonate.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0164514 A
- EP 0550048 A